# EUROPEAN PATENT SPECIFICATION

(11) **EP 3 353 834 B1**
(45) Date of publication and mention of the grant of the patent: **04.08.2021**
(21) Application number: 16849825.1
(22) Date of filing: 24.09.2016
(51) Int. Cl.: H01M 4/24, H01M 4/29, H01M 10/24, H01M 10/30, H01M 4/66, H01M 4/02

(54) **ELECTROLESS PLATED ANODE FOR SECONDARY BATTERY**
STROMLOS PLATTIERTE ANODE FÜR SEKUNDÄRBATTERIE
ANODE PLAQUÉE PAR PROCESSUS AUTOCATALYTIQUE POUR BATTERIE SECONDAIRE

(30) Priority: 25.09.2015 US 201514866103
(43) Date of publication of application: 01.08.2018
(73) Proprietor: Vizn Energy Systems Inc., Columbia Falls, Montana 59912 (US)
(72) Inventor: TARRANT, Derek C., Kalispell, Montana 59901 (US)
(74) Representative: GPI & Associés
(86) International application number: PCT/US2016/053611
(87) International publication number: WO 2017/053912

(56) References cited:
- EP-A1- 2 403 040
- JP-A- H0 471 162
- JP-A- 2015 032 425
- RU-C- 1 807 093
- US-A- 4 952 465
- US-B1- 6 245 463
- KANG J ET AL: "Comparing the anodic reactions of Ni and Ni-P amorphous alloy in alkaline solution", CORROSION SCIENCE, OXFORD, GB, vol. 51, no. 9, 21 May 2009 (2009-05-21), - 15 September 2009 (2009-09-15), pages 1907-1913, XP026437629, ISSN: 0010-938X [retrieved on 2009-05-21]
- ZHANG Y ET AL: "Electrochemical hydrogen storage properties of MgNi-NiP composite material", JOURNAL OF ALLOYS AND COMPOUNDS, ELSEVIER SEQUOIA, LAUSANNE, CH, vol. 474, no. 1-2, 17 April 2009 (2009-04-17), pages 279-282, XP025970719, ISSN: 0925-8388, DOI: 10.1016/J.JALLCOM.2008.06.091 [retrieved on 2008-07-29]

## Description

### TECHNICAL FIELD

This disclosure relates to anodes for secondary batteries

### BACKGROUND

An accumulator, rechargeable battery, secondary cell, or storage battery can be charged, discharged, and recharged a number of times. It can include one or more electrochemical cells. The term "accumulator" may be used as it accumulates and stores energy through a reversible electrochemical reaction. Rechargeable batteries are produced in a variety of different shapes and sizes, ranging from button cells to megawatt systems arranged to stabilize an electrical distribution network. Several different combinations of electrode materials and electrolytes are used, including lead-acid, nickel cadmium, nickel metal hydride, lithium ion, and lithium ion polymer.

The document US4952465 describes an electrode additive for use in electrochemical energy storage devices that evolve gaseous hydrogen and oxygen. The electrode additive has gas recombination capabilities to reduce gaseous hydrogen and oxygen in the energy storage device, e.g. a sealed secondary battery system such as alkaline nickel-cadmium or nickel-iron battery. The electrode additive is coating on negative electrode of the energy storage device, or an auxiliary electrode, or one negative electrode in a series.

The document XP026437629 (KANG J. et al. "Comparing the anodic reactions of Ni and Ni-P amorphous alloy in alkaline solution") describes anodic reactions of amorphous Ni-P alloys for batteries, prepared by electroless plating as compared with pure Ni in 6 M KOH. The components of Ni-P alloys in structure and surface are verified before and after cyclic voltammetry (CV) by X-ray diffraction (XRD) and X-ray photoelectron spectroscopy (XPS) scanning. The variation of the total anodic charge density suggests that the corrosion resistance of Ni is superior to that of amorphous Ni-P alloy in 6 M KOH under potential polarization.

The document XP025970719 (ZHANG Y. et al. "Electrochemical hydrogen storage properties of MgNi-NiP composite material") describes electrochemical hydrogen storages with alkaline electrolyte having MgNi and NiP alloy composites electrodes. The cycle stability of the composite electrodes is improved due to the anti-corrosion property in the electrolyte. The composite electrodes have decreased charge-transfer resistance, indicating improved electrochemical kinetics of the composite electrodes.

The document EP2403040 describes a negative electrode active material for a lithium ion secondary battery. The negative electrode active material is formed by coating of a polymer particle with a metal layer by metal plating. The negative electrode active material has improved charge-discharge cycle characteristic.

The document US6245463 describes a substrate for a secondary battery electrode. The substrate is produced by generating a liquid phase when a sintered porous metal is heat-bonded to a ground metal plate or electrode current collector. The ground plate has a metal layer having a melting point lower than that of a steel sheet on at least one side of the steel sheet. A nickel-phosphorus layer, e.g. boronized, is preferred.

### SUMMARY

A secondary battery comprises an alkaline electrolyte, and a negative electrode in contact with the alkaline electrolyte and including a conductive metal substrate having thereon an amorphous metal alloy coating of nickel and phosphorous.

### BRIEF DESCRIPTION OF THE DRAWINGS

FIGURE 1 is a schematic diagram of an energy storage system including a cell having a cathode, an anode, and a separator between the cathode and anode.
FIGURE 2 is a schematic diagram of the anode of Figure 1.

### DETAILED DESCRIPTION

Embodiments of the present disclosure are described herein. It is to be understood, however, that the disclosed embodiments are merely examples and other embodiments may take various and alternative forms as per the claims. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present invention. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Within the context of certain rechargeable batteries, nickel would be an ideal electrode material upon which to deposit zinc were it not for the fact that nickel surfaces exhibit intrinsic low hydrogen overvoltage and that a voltage potential can develop between the nickel and zinc metal under alkaline conditions. Typically when attempting to deposit zinc onto a nickel surface, little or no zinc is deposited. A quantity of hydrogen is instead evolved. Depending on the current applied and to a lesser extent time, the hydrogen overvoltage on certain portions of the nickel surface may be overwhelmed and forced to accept a zinc deposit on those areas. Once the charging current is removed however, any uncovered nickel surface behaves as a cathode in contact with any zinc plated surfaces which then become anodic. The result is that an electrical current flows and a rapid dissolution of the remaining zinc deposit results. In an electrochemical cell, this would result in self-discharge and capacity loss. Thus any of the charge (in the form of deposited zinc) that managed to get onto the electrode would be swiftly corroded off and lost due to these self-discharge effects once the charging current was removed. A nickel surface, in other respects, is an extremely corrosion resistant electrode coating and would result in a cell capable of resisting severe potential reversal.

### OVERVIEW

Certain embodiments disclosed herein make use of an unexpected transformation of nickel surface properties when such nickel is deposited via an electroless process. This can be understood by comparing the metallurgy of a normally electroplated nickel surface, which is essentially 100% nickel metal, versus the various alloys of nickel and phosphorous that are co-deposited in several variants during the electroless deposition process. The use of phosphorous containing reducing agents necessary to the electroless process results in a percentage of phosphorous being co-deposited with the nickel. This percentage can vary, for example, from 6 to 9% in mid phosphorous baths to 10 to 12% in high phosphorous baths. The addition of phosphorous in the nickel deposit modifies the nickel surface in a way that modifies the hydrogen overvoltage and/or reduces the tendency to reject the deposition of zinc upon that surface. The end result is a battery electrode that will accept charge yet can resist the effects of severe battery reversal without damage and resume regular battery operation once normal conditions prevail. Such a potential reversal could destroy conventional cells within a short time. This can be important in multiple cell stacks in which the cells are connected in series, especially if the cells within a stack attain differing states of charge as can happen in the presence of shunt currents through shared electrolyte manifolds. Having a resistant coating allows the complete discharge of high capacity cells within a stack even if that requires that low capacity cells are forced into reversal during the latter stages of discharge.

### ELECTROLESS NICKEL PLATING

Electroless nickel plating (EN) is an auto-catalytic chemical technique used to deposit a layer of nickel-phosphorus or nickel-boron alloy on a solid workpiece. The process relies on the presence of a reducing agent, such as hydrated sodium hypophosphite, which reacts with the metal ions to deposit metal. Alloys with different percentages of phosphorus, ranging from 2 to 5% (low phosphorus) to up to 11 to 14% (high phosphorus), are possible. The metallurgical properties of the alloys depend on the percentage of phosphorus.

An electroless nickel bath may include a nickel source (e.g., nickel sulfate), a reducing agent (e.g., sodium hypophosphite), a complexing agent (e.g., carboxylic acids or amines) which may be necessary to increase phosphite solubility and to slow the reaction speed in order to prevent white-out phenomena without being co-deposited into the resulting alloy, stabilizers (e.g., lead or sulfur) which slow the reduction by co-deposition with the nickel, buffers (most complexing agents also act as buffers), brighteners (e.g., cadmium), surfactants (e.g., sodium lauryl sulfate) which reduce surface tension in order to reduce pitting and staining, and accelerators (sulfur compounds) which are added to overcome the slow plating rate imparted by complexing agents.

Electroless nickel plating has several advantages versus electroplating. Free from flux-density and power supply issues, it provides an even deposit regardless of workpiece geometry, and with the proper pre-plate catalyst, can deposit on non-conductive surfaces.

Before performing electroless nickel plating, the material to be plated is typically cleaned by a series of chemicals. Failure to remove unwanted "soils" from the part's surface can result in poor plating. Each pretreatment chemical should be followed by water rinsing to remove chemicals that may adhere to the surface. De-greasing removes oils from surfaces, whereas acid cleaning removes scaling.

Activation can be done with a weak acid etch or nickel strike. After the plating process, plated materials can be finished with an anti-oxidation or anti-tarnish chemical such as trisodium phosphate or chromate, followed by water rinsing to prevent staining. The rinsed object is then completely dried or baked to increase the hardness of the plating film.

Low phosphorus treatment is applied for deposits with hardness up to 60 Rockwell C. This type offers a uniform thickness inside complex configurations as well as outside, which often eliminates grinding after plating. It may provide excellent corrosion resistance in alkaline environments. Medium phosphorus electroless nickel can refer to differing levels of phosphorus depending on the branch of technology: 4 to 7% by weight (decorative purposes), 6 to 9% by weight (industrial sources), or 4 to 10% by weight (electronic applications). High phosphorus electroless nickel offers high corrosion resistance, making it ideal for industry standards requiring protection from highly corrosive acidic environments such as oil drilling and coal mining. With micro-hardness ranging up to 600 VPN, this type ensures very little surface porosity where pit-free plating is required. Deposits tend to be non-magnetic when phosphorus content is greater than 11.2%.

### EXAMPLE SECONDARY BATTERY

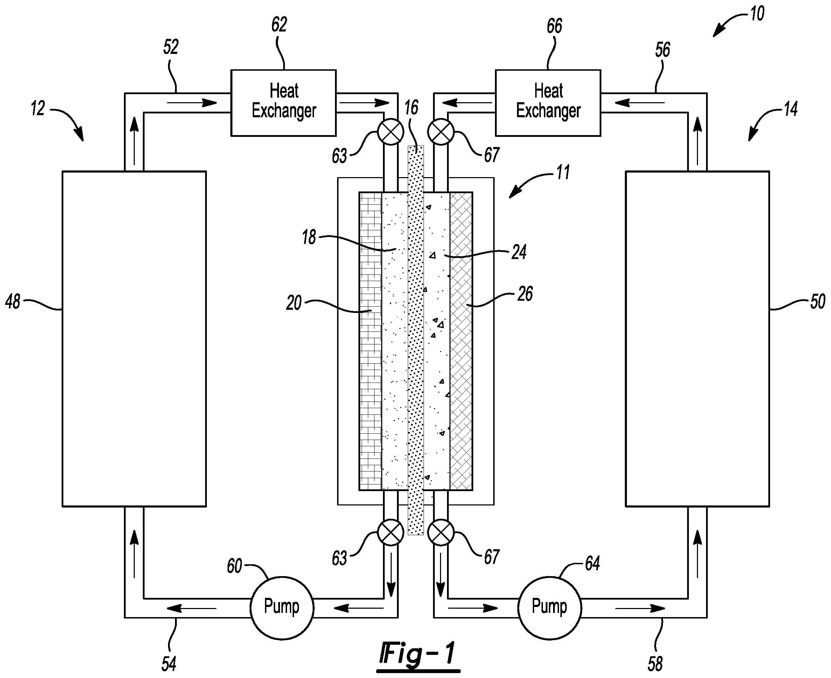

Figure 1 shows an energy storage system 10 configured as an electrochemical flow battery that is operable to store energy received from a source, and to discharge energy to one or more devices to do work. For example, the system 10 may be used in electrical utility applications for load leveling, power transmission deferral, wind power integration, and/or solar power integration.

The system 10 includes a flow cell 11 and first and second electrolyte supply arrangements 12 and 14, respectively, for supplying electrolytes to the cell 11 such that the system 10 forms an electrochemical reactor, as explained below in greater detail. Although the system 10 is shown with a single flow cell 11, the system 10 may include multiple flow cells 11 that are joined together in a cell stack and that each have the same or similar configuration as described below in detail. Examples of cell stacks are disclosed in U.S. Patent Application No. 13/196,498.

The cell 11 includes a cathode side and an anode side separated by a separator 16 (e.g., an ion exchange membrane). The cathode side includes a cathode chamber 18 that receives a first electrolyte, such as a catholyte, from the first electrolyte supply arrangement 12, and a first electrode, such as cathode 20. Likewise, the anode side includes an anode chamber 24 that receives a second electrolyte, such as an anolyte, from the second electrolyte supply arrangement 14, and a second electrode, such as anode 26.

The cathode 20 and anode 26 may be made of any suitable material and may be electrically connected together to form an electric circuit. For example, the cathode 20 may be formed as a nickel coating, or other suitable coating, on an appropriately conductive or nonconductive substrate, such as a steel, iron (or iron alloy), or plastic plate, and the anode 26 may be formed as an electroless nickel (or alloys thereof) coating on another appropriately conductive or nonconductive substrate, such as a steel, iron (or iron alloy), or plastic plate. The coating for the anode 26 may also include copper or iron.

If the system 10 is provided with multiple cells 11, all of the associated cathodes 20 may communicate electrically and/or ionically, and all of the associated anodes 26 may also communicate electrically and/or ionically. Furthermore, with a multiple cell configuration, the endmost electrodes may function as current collectors. In that regard, with the orientation shown in Figure 1, the leftmost cathode may function to collect current from the other cathodes, and the rightmost anode may function to collect current from the other anodes. The leftmost cathode and the rightmost anode may also be electrically connected together to form a circuit.

The electrolyte supply arrangements 12 and 14 are configured to supply electrolytes to the chambers 18 and 24 of the cell 11, and the electrolytes function to ionically connect the electrodes 20, 26 of the cell 11. The first electrolyte supply arrangement 12 includes a first electrolyte reservoir, such as a catholyte tank 48, in fluid communication with the cathode chamber 18 for storing a catholyte, such as an aqueous solution containing an electrochemically reducible iron salt, cerium salt, halide, or vanadium oxide; water and alkali metal hydroxide or sulfuric acid; or a non-aqueous solution containing ethylammonium nitrate, imidazolium, sodium hexafluorophosphate, lithium hexafluorophosphate, lithium tetrafluoroborate and/or haloaluminate material or materials. Likewise, the second electrolyte supply arrangement 14 includes a second electrolyte reservoir, such as an anolyte tank 50, in fluid communication with the anode chamber 24 and configured to store an anolyte, such as an aqueous solution or slurry containing zinc particles, zinc oxide, iron salt, cerium salt, halide, or vanadium oxide; water and alkali metal hydroxide or sulfuric acid; or a non-aqueous solution containing ethylammonium nitrate, imidazolium, sodium hexafluorophosphate, lithium hexafluorophosphate, lithium tetrafluoroborate and/or haloaluminate material or materials. The catholyte tank 48 may be connected to a housing or body of the cell 11 via a catholyte supply line 52 and a catholyte return line 54, and the anolyte tank 50 may be connected to the housing or body of the cell 11 via an anolyte supply line 56 and an anolyte return line 58. Furthermore, the lines 52, 54, 56 and 58, or portions thereof, may be flexible and/or extendable to accommodate opening and closing of the cell 11.

The first electrolyte supply arrangement 12 may further include a catholyte circulation pump 60 for moving catholyte between the catholyte tank 48 and the cathode chamber 18, a first heat exchanger 62 for controlling temperature of the catholyte, and suitable valves 63 for controlling flow of the catholyte. Likewise, the second electrolyte supply arrangement 14 may include an anolyte circulation pump 64 for moving anolyte between the anolyte tank 50 and the anode chamber 24, a second heat exchanger 66 for controlling temperature of the anolyte, and suitable valves 67 for controlling flow of the anolyte.

When the cell 11 is in a closed position shown in Figure 1, the system 10 may function in a charge mode or a discharge mode. In the charge mode, the system 10 accepts electrical energy from a source and stores the energy through chemical reactions. In the discharge mode, the system 10 may convert chemical energy to electrical energy, which is released to a load in order to do work. In either mode, the separator portion 16 may facilitate chemical reactions, such as oxidation and reduction reactions at the electrodes 20, 26, by allowing ions to pass therethrough from one of the chambers 18, 24 to the other of the chambers 18, 24.

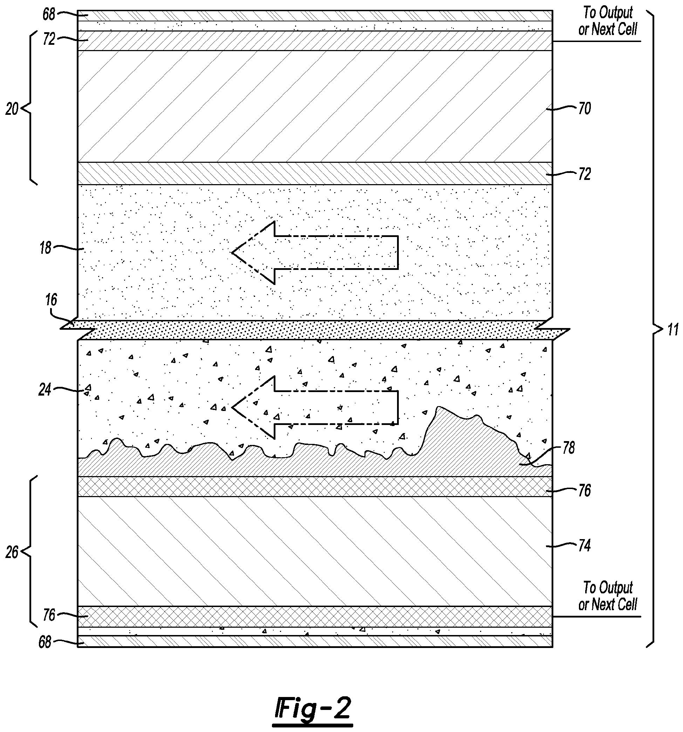

Figure 2 shows the cell 11 in greater detail and including a housing 68. The cathode 20, for example, includes a steel substrate 70 coated with electroplated nickel or pure nickel 72. The anode 26 (negative electrode), for example, include a steel substrate 74 coated with electroless nickel 76 as described herein. A zinc deposit 78 on the anode 26 is also shown forming in the anode chamber 24. Upon inspection, the electroless nickel 76 is amorphous and glass-like (non-crystalline) unlike electrolytic nickel, which is crystalline. Generally speaking, the more phosphorous present in the coating 76, the better.

While example embodiments are described above, it is not intended that these embodiments describe all possible forms encompassed by the claims. Application techniques other than electroless plating may be used: vacuum deposition or flame spraying, for example, can be used to produce the amorphous phase phosphorous present in the nickel coating. Cobalt or alloys thereof, can also be included to the amorphous metal alloy of nickel and phosphorous. Moreover, secondary batteries other than flow batteries are also contemplated.

The words used in the specification are words of description rather than limitation, and it is understood that various changes may be made without departing from the scope of the disclosure. As previously described, the features of various embodiments may be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics may be compromised to achieve desired overall system attributes, which depend on the specific application and implementation. These attributes may include, but are not limited to cost, strength, durability, life cycle cost, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and may be desirable for particular applications.

## Claims

1. A secondary battery comprising:
an alkaline electrolyte including zinc; and
a negative electrode in contact with the alkaline electrolyte and including a conductive metal substrate having thereon (i) a coating of an amorphous metal alloy of electroless nickel and phosphorous, and (ii) a coating of the zinc during charge deposition.

2. The secondary battery of claim 1, wherein the amorphous metal alloy coating also includes cobalt.

3. The secondary battery of claim 1, wherein the amorphous metal alloy coating also includes copper.

4. The secondary battery of claim 1, wherein the amorphous metal alloy coating also includes iron.

5. The secondary battery of claim 1, wherein the conductive metal substrate is iron or an iron alloy.

## Patentansprüche

1. Sekundärbatterie mit:
einem zinkhaltigen alkalischen Elektrolyten; und
einer negativen Elektrode, die in Kontakt mit dem alkalischen Elektrolyten steht und ein leitfähiges Metallsubstrat aufweist, auf dem
eine Beschichtung aus einer amorphen Metalllegierung aus stromlosem Nickel und Phosphor und
eine Be-schichtung aus dem Zink während der Ladungsabscheidung aufgebracht ist.

2. Sekundärbatterie nach Anspruch 1, bei der die Beschichtung aus einer amorphen Me-talllegierung auch Kobalt enthält.

3. Sekundärbatterie nach Anspruch 1, bei der die amorphe Metalllegierungsbeschichtung auch Kupfer enthält.

4. Sekundärbatterie nach Anspruch 1, bei der die amorphe Metalllegierungsbeschichtung auch Eisen enthält.

5. Sekundärbatterie nach Anspruch 1, bei der das leitende Metallsubstrat Eisen oder eine Eisenlegierung ist.

## Revendications

1. Batterie rechargeable comprenant :
un électrolyte alcalin incluant du zinc ; et
une électrode négative en contact avec l'électrolyte alcalin et incluant un substrat de métal conducteur ayant sur celui-ci
(i) une couche d'un alliage métallique amorphe de nickel et de phosphore obtenu par réaction autocatalytique, et
(ii) une couche du zinc obtenu par dépôt lors de la charge.

2. Batterie rechargeable selon la revendication 1, dans laquelle la couche d'alliage métallique amorphe inclut également du cobalt.

3. Batterie rechargeable selon la revendication 1, dans laquelle la couche d'alliage métallique amorphe inclut également du cuivre.

4. Batterie rechargeable selon la revendication 1, dans laquelle la couche d'alliage métallique amorphe inclut également du fer.

5. Batterie rechargeable selon la revendication 1, dans laquelle le substrat de métal conducteur est du fer ou un alliage de fer.
